# Europäisches Patentamt

# European Patent Office

# Office européen des brevets

(19)

(11) Veröffentlichungsnummer: **0 013 944**
**B1**

(12) **EUROPÄISCHE PATENTSCHRIFT**

(45) Veröffentlichungstag der Patentschrift:
19.01.83

(51) Int. Cl.³: **H 04 B 3/46**

(21) Anmeldenummer: 80100226.2

(22) Anmeldetag: **17.01.80**

(54) Verfahren und Anordnung zur Fehlerortung und Überwachung einer Nachrichtenverbindung.

(30) Priorität: **30.01.79 DE 2903493**

(43) Veröffentlichungstag der Anmeldung:
**06.08.80 Patentblatt 80/16**

(45) Bekanntmachung des Hinweises auf die Patenterteilung:
**19.01.83 Patentblatt 83/3**

(84) Benannte Vertragsstaaten:
**AT BE CH DE FR GB IT LU NL SE**

(56) Entgegenhaltungen:
**DE-A-2 442 208**
**DE-B-1 487 294**
**US-A-3 739 098**
**US-A-3 770 913**

(73) Patentinhaber: **SIEMENS AKTIENGESELLSCHAFT,
Berlin und München Wittelsbacherplatz 2,
D-8000 München 2 (DE)**

(72) Erfinder: **Aichholz, Eckhart, Gabriele Münter Strasse 17,
D-8000 München 71 (DE)**
Erfinder: **Meyer, Joseph, Gartenpromenade 23,
D-8035 Gauting (DE)**

## Verfahren und Anordnung zur Fehlerortung und Überwachung einer Nachrichtenverbindung

Die Erfindung betrifft ein Verfahren zur Fehlerortung und Überwachung einer Nachrichtenverbindung, die in periodischen Abständen insgesamt k Zwischenstellen enthält und bei der l parallele Nachrichtenübertragungsstrecken vorgesehen sind, die jeweils in den k Zwischenstellen getrennt nach l Überwachungseinrichtungen angeschlossen sind, von denen Zustandsmeldungen an eine auswertende Stelle übermittelt werden, daß die jeweils in den k Zwischenstellen enthaltenen l Überwachungseinrichtungen nach Art einer Matrix so angeordnet sind, daß die eine Matrixkoordinate die Angabe über die jeweilige Zwischenstelle und die andere Matrixkoordinate die Angabe über die jeweilige Überwachungseinrichtung darstellt, daß bei einer Nachrichtenverbindung für digitale Signale die Zwischenstellen jeweils eine Muffe darstellen, die eine der Anzahl l der digitalen Übertragungsstrecken entsprechende Anzahl l an Regeneratoren enthält, an die jeweils eine Überwachungseinrichtung angeschlossen ist. .

Räumlich ausgedehnte Nachrichtenverbindungen enthalten in der Regel in bestimmten Abständen angeordnete Zwischenstellen, in denen bei Trägerquequenzsignalen eine Entzerrer- und Verstärkeranordnung und bei digitalen Signalen zusätzlich eine Anordnung zur zeitlichen Regenerierung dieser Signale vorgesehen sind. Diese Einrichtungen sind üblicherweise als Unterflurbehälter ausgebildet und dadurch einer direkten Überwachung nicht ohne weiteres zugänglich. Aus diesem Grunde ist es wünschenswert, von einer Endstelle aus die Überwachung dieser Einrichtungen und gegebenenfalls auch die Ortung eines aufgetretenen Fehlers vornehmen zu können. .

Es ist bereits bekannt, von einer ortenden Endstelle aus in einer Zwischenstelle einen Schleifenschluß zwischen dem Ausgang eines in Ortungsrichtung wirkenden PCM-Regenerators und dem Eingang des PCM-Regenerators für die Gegenrichtung vorzunehmen und über diese Schleife Prüfsignale zu übertragen. Dabei ist jedoch der Betrieb über diese Strecke unterbrochen.

Es ist auch bereits bekannt, durch eine Überwachung eines mitübertragenen Pilotsignals bei Trägerfrequenzstrecken die Qualität dieser Strecke zu überprüfen; bei PCM-Strecken ist es außerdem bereits bekannt, die Qualität der Übertragung der PCM-Signale dadurch zu überprüfen, daß die Einhaltung des bei der Erzeugung dieser PCM-Signale verwendeten Codegesetztes überwacht wird.

Als Ergebnis der Überwachung besteht das Problem, das Überwachungsergebnis an eine zentrale Stelle zu übermitteln, wobei im Fehlerfall der Fehlerort möglichst genau bekannt sein sollte.

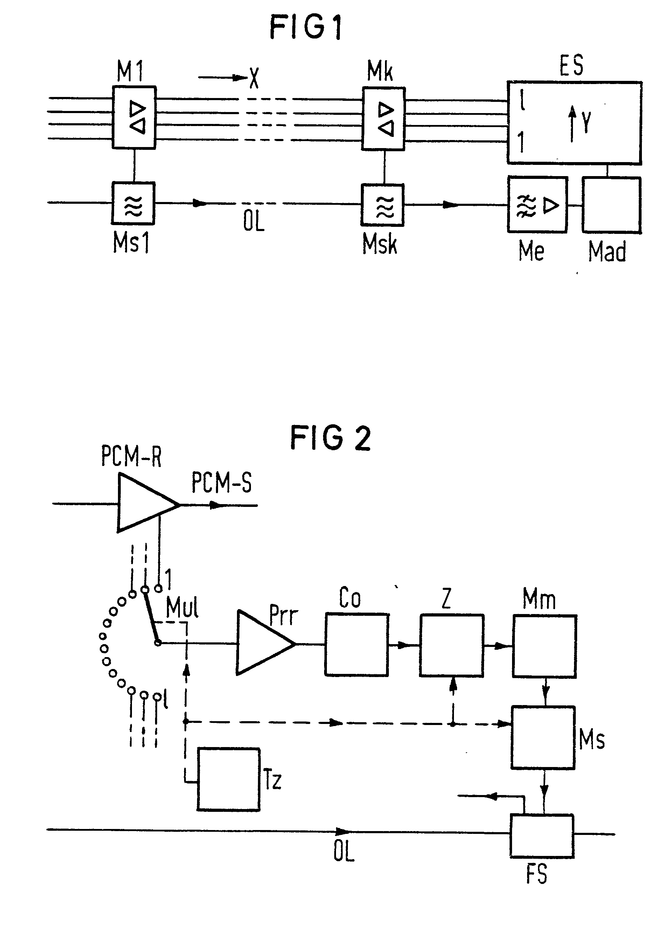

Aus der US-Patentschrift 37 39 098, insbesondere deren Fig. 1 und entsprechender Beschreibung ist ein Verfahren zur Fehlerortung und Überwachung einer Nachrichtenverbindung, die in periodischen Abständen Zwischenstellen enthält und bei der mehrere parallele Nachrichtenübertragungsstrecken vorgesehen sind, bekannt. In den Zwischenstellen sind die Nachrichtenübertragungsstrecken an getrennte Überwachungseinrichtungen angeschlossen, von denen Zustandsmeldungen an eine auswertende Stelle übermittelt werden. Die Überwachungseinrichtungen in den Zwischenstellen sind nach Art einer Matrix angeordnet, wobei die eine Matrixkoordinate die Angabe über die jeweilige Zwischenstelle und die andere Matrixkoordinate die Angabe über die jeweilige Überwachungseinrichtung darstellt. Die Fehlermeldung zu einer Zentrale erfolgt dabei so, daß die Matrixkoordinaten im Adreßcode des Prüfsignals enthalten sind.

Aus der US-Patentschrift 3 770 913, insbesondere deren Fig. 1 und 3 ist es auch bekannt, zur Überwachung die Matrixkoordinaten über spezifische Frequenzen für die jeweilige Überwachungseinrichtung im Rückmeldesignal zu übertragen. Bei dem Verfahren nach dieser Patentschrift wird außerdem ein Frequenzmultiplexverfahren verwendet.

Die Aufgabe der Erfindung besteht also darin, die Übertragung von Fehlermeldungen zu einer zentralen Stelle sicher, schnell und außerdem mit geringem Aufwand zu ermöglichen.

Erfindungsgemäß wird die Aufgabe dadurch gelöst, daß als Zustandsmeldung eine Fehlermeldung in Form der Übertragung der Matrixkoordinaten der den Fehler feststellenden Überwachungseinrichtung erfolgt, daß alle Zustandsmeldungen der Überwachungseinrichtungen einer Muffe über eine ODER-Funktion miteinander verknüpft und bei Erkennen eines Fehlers die Matrixkoordinate der betreffenden Muffe übermittelt wird und außerdem in einer Endstelle die einzelnen parallelen Nachrichtenübertragungsstrecken überwacht werden und die Matrixkoordinate der fehlerhaften Nachrichtenübertragungsstrecken an eine zentrale Stelle übermittelt wird und erst dort die Kombination der beiden Matrixkoordinaten zur Erkennung der Fehlerstelle erfolgt.

Der besondere Vorteil des erfindungsgemäßen Verfahrens liegt darin, daß zur Übertragung von k × l möglichen Fehlerorten nur die Übertragung von k + l Meldungen notwendig ist.

Die Übertragung der Zustandsmeldungen kann in einem freien Kanal der Nachrichtenverbindung erfolgen, wegen des vergleichsweise geringen Informationsflusses ist es jedoch zweckmäßig, die Übermittlung der Matrixkoordinaten über eine von der Nachrichtenverbindung getrennte Ortungsleitung vorzunehmen.

Um auch bei der weiteren Übertragung der Fehlermeldung den Informationsfluß gering zu halten, ist eine Variante der Erfindung zweckmäßig, bei der bei einer weiteren Übertragung der Matrixkoordinaten diese unabhängig voneinander und nicht als Kombination übertragen werden.

Eine weitere zweckmäßige Ausbildung des Verfahrens nach der Erfindung ergibt sich dadurch, daß die Fehlermeldeschwelle in den Muffen und in den Endstellen unterschiedlich gewählt ist.

Die Erfindung soll im folgenden anhand der Zeichnung näher erläutert werden. In der Zeichnung zeigt

Fig. 1 einen Teil einer PCM-Strecke in einer Prinzipdarstellung und

Fig. 2 eine einzelne Überwachungseinrichtung in einer PCM-Zwischenstelle.

In der Fig. 1 ist mit M1 die erste und mit Mk die k-te Muffe einer PCM-Verbindung dargestellt, die I parallele PCM-Strecken umfaßt. Entsprechend den I PCM-Strecken sind in jeder der Muffen M1 . . . Mk jeweils I PCM-Regeneratoren enthalten, die auf beide Gesprächsrichtungen aufgeteilt sind. Die in den Muffen M1 . . . Mk enthaltenen PCM-Regeneratoren stellen also ein Regeneratorfeld dar, das mittels einer Matrix beschrieben werden kann. Als x-Koordinate der Matrix wurde dabei die fortlaufende Nummer der jeweiligen Muffe gewählt, während die y-Koordinate die Aussage über die jeweilige Nachrichtenübertragungsstrecke liefert. Die Nachrichtenübertragungsstrecken sind dabei unabhängig von der Übertragungsrichtung fortlaufend numeriert. Im vorliegenden Falle ist mit jeder Muffe ein Meldesender Ms1 . . . Msk unmittelbar verbunden, der eine in der Muffe entstandene Fehlermeldung in Form der Koordinate dieser Muffe über die Ortungsleitung OL an einen in der auswertenden Stelle angeordneten Meldeempfänger Me abgibt. Die zweite Matrixkoordinate einer gestörten Stelle wird in der Endstelle ES ermittelt, in der jede der parallelen Übertragungsstrecken der einen Übertragungsrichtung empfangsseitig überwacht wird. Die Überwachungsergebnisse der Gegenrichtung können von der anderen Endstelle aus über die Ortungsleitung an die auswertende Stelle übermittelt werden. Im Hinblick auf den dafür eventuell benötigten Aufwand ist es mit einer Anordnung nach Fig. 1 auch möglich, in jeder Muffe die Nummer der gestörten Nachrichtenübertragungsstrecke festzustellen und diese über den Meldesender an den Meldeempfänger zu übermitteln. In dem mit der Endstelle ES und dem Meldeempfänger Me verbundenen Matrixdecoder Mad werden die beiden Matrixkoordinaten zusammengeführt und dadurch die gestörte Stelle identifiziert.

In der Fig. 2 ist die Überwachungseinrichtung einer Muffe einer PCM-Verbindung dargestellt, die über einzelne PCM-Regeneratoren PCM-R geführt ist. Das vom Ausgang des PCM-Regenerators gegebene PCM-Signal PCM-S wird außerdem noch von einem weiteren Ausgang dieses Regenerators einem Anschluß eines Auswahlschalters Mul zugeführt, der durch eine Taktzentrale Tz gesteuert, nacheinander diese Anschlüsse mit dem Eingang eines Prüfgenerators Prr verbindet. Bei einem derartigen Prüfregenerator handelt es sich um einen vereinfachten PCM-Regenerator, der im Hinblick auf den nur wenig schwankenden Eingangspegel und den zu vernachlässigenden Phasenjitter der Eingangssignale keine aufwendige Entzerrer- und Taktregelung besitzt. Dadurch kommt dieser Prüfregenerator mit einer geringen Speiseleistung aus.

An den Ausgang des Prüfregenerators ist eine an sich bekannte Code-Überwachungseinrichtung Co für die digitalen Signale angeschlossen. Im vorliegenden Falle wird die Einhaltung der HDB-3-Coderegel überwacht. Eine Verletzung dieser Coderegel äußert sich als Ausgangssignal, das dem Eingang eines getakteten Fehlerzählers Z zugeführt wird. Durch die Taktung ist der Fehlerzähler in der Lage, eine zeitbezogene, also relative Fehlerzahl zu bestimmen. Überschreitet diese Fehlerrate eine voreingestellte Fehlerquelle, dann wird ein entsprechendes Ausgangssignal vom Fehlerzähler an einen Meldespeicher Mm abgegeben. Ebenso wird bei Taktausfall eine Fehlermeldung in Form einer logischen Eins an den Meldespeicher gegeben. Der Meldespeicher enthält ein Schieberegister, in dessen erster Stufe eine vom Fehlerzähler Z empfangene logische Eins über den gesamten Abfragezyklus gespeichert wird. Die Löschung erfolgt erst durch einen von der Taktzentrale für den Auswahlschalter Mul erzeugten Rückstellimpuls, der zusätzlich dem Meldesender Ms zugeführt wird. Die Fehlermeldung kann von der ersten Stufe des Schieberegisters direkt an einen Meldesender Ms weitergeleitet werden, es ist auch möglich, die Fehlermeldung an weitere Schieberegisterstufen weiterzugeben. Da die einzelnen Stufenausgänge des Schieberegisters mit den Eingängen eines UND-Gatters verbunden sind, kann auch die Aussendung einer Fehlermeldung von einem längeren Andauern eines Fehlers entsprechend dem Auftreten von logischen Eins-Impulsen in mehreren Schieberegisterstufen abhängig gemacht werden. Die einzelnen Meldesender Ms sind über die Fernspeiseweiche FS mit ihrem Ausgang an die Ortungsleitung OL angeschlossen, die im vorliegenden Falle durch die Fernspeiseleitung gebildet wird.

## Patentansprüche

1. Verfahren zur Fehlerortung und Überwachung einer Nachrichtenverbindung, die in periodischen Abständen insgesamt k Zwischenstellen (M1 . . . Mk) enthält und bei der I parallele Nachrichtenübertragungsstrecken vorgesehen sind, die jeweils in den k Zwischenstellen (M1 . . . Mk) getrennt nach I Überwachungseinrichtungen angeschlossen sind, von denen Zustandsmeldungen an eine auswertende Stelle (Me) übermittelt werden, daß die jeweils in den k Zwischenstellen (M1 . . . Mk) enthaltenen I Überwachungseinrichtungen nach Art einer Matrix so angeordnet sind, daß die eine Matrixkoordinate (k) die Angabe über die jeweilige Zwischenstelle und die andere Matrixkoordinate (l) die Angabe über die jeweilige Überwachungseinrichtung darstellt, daß bei einer Nachrichtenverbindung für digitale Signale die Zwischenstellen (M1 ... Mk) jeweils eine Muffe darstellen, die eine der Anzahl l der digitalen Übertragungsstrecken entsprechende Anzahl l an Regeneratoren (PCM-R) enthält, an die jeweils eine Überwachungseinrichtung angeschlossen ist, dadurch gekennzeichnet, daß als Zustandsmeldung eine Fehlermeldung in Form der Übertragung der Matrixkoordinaten (k, l) der den Fehler feststehenden Überwachungseinrichtung erfolgt, daß alle Zustandsmeldungen der Überwachungseinrichtungen einer Muffe (M1 ... Mk) über eine ODER-Funktion miteinander verknüpft und bei Erkennen eines Fehlers die Matrixkoordinate (k, l) der betreffenden Muffe (M1 ... Mk) übermittelt wird und außerdem in einer Endstelle (ES) die einzelnen parallelen Nachrichtenübertragungsstrecken überwacht werden und die Matrixkoordinate der fehlerhaften Nachrichtenübertragungsstrecken an eine zentrale Stelle (Mad) übermittelt wird und erst dort die Kombination der beiden Matrixkoordinaten (k, l) zur Erkennung der Fehlerstelle erfolgt.

2. Verfahren nach Patentanspruch 1, dadurch gekennzeichnet, daß bei einer weiteren Übertragung der Matrixkoordinaten (k, l) diese unabhängig voneinander und nicht als Kombination übertragen werden.

3. Verfahren nach Patentanspruch 1, dadurch gekennzeichnet, daß die Fehlermeldeschwelle in den Muffen (M1 ... Mk) und in den Endstellen (ES) unterschiedlich gewählt ist.

## Claims

1. Process for fault location and monitoring of a communications connection which contains a total of k intermediate stations (M1 ... Mk) at periodic intervals and wherein l parallel communications transmission links are provided each of which are separately connected in the k intermediate stations (M1 ... Mk) to l monitoring devices from which state messages are transmitted to an analysing station (Me), that the l monitoring devices contained in each of the k intermediate stations (M1 ... Mk) are arranged in the form of a matrix so that one matrix coordinate (k) represents a statement concerning the intermediate station in question and the other matrix coordinate (l) represents a statement concerning the monitoring device in question, that in the case of a communications connection for digital signals the intermediate stations (M1 ... Mk) each represent a coupling which contains a number l of regenerators (PCM-R) corresponding to the number l of digital transmission links, each of which regenerators is connected to a monitoring device, characterised in that the state message consists of a fault message in the form of the transmission of the matrix coordinates (k, l) of the monitoring device which establishes the fault, that all the state messages of the monitoring devices of a coupling (M1 ... Mk) are logic-linked to one another via an OR function and on the recognition of a fault, the matrix coordinate (k, l) of the coupling (M1 ... Mk) in question is supplied and moreover in an end station (ES) the individual parallel communications transmission links are monitored and the matrix coordinate of the faulty communications transmission links is fed to a central position (Mad) and only there are the two matrix coordinates (k, l) combined in order that the fault location may be recognised.

2. Process as claimed in claim 1, characterised in that in the event of a further transmission of the matrix coordinates (k, l) these are transmitted independently of one another and not as a combination.

3. Process as claimed in claim 1, characterised in that the fault message threshold in the couplings (M1 ... Mk) and in the end stations (ES) are selected to differ.

## Revendications

1. Procédé pour la localisation d'un dérangement et la surveillance d'une connexion de communication, qui comporte au total k postes intermédiaires (M1 ... Mk) à intervalles périodiques, et dans laquelle sont prévues l voies parallèles de transmission de communications qui, dans les k postes intermédiaires (M1 ... Mk) sont respectivement raccordées séparément à l dispositifs de surveillance dont les messages d'état sont transmis à un poste d'évaluation (Me), les dispositifs de surveillance contenus respectivement dans les k postes intermédiaires (M1 ... Mk) sont agencés à la manière d'une matrice de manière qu'une des coordonnées matricielles (k) représente le poste intermédiaire respectif et l'autre coordonnée matricielle (l) représente le dispositif de surveillance respectif, et, dans le cas d'une connexion de communications pour des signaux numériques, des postes intermédiaires (M1 ... Mk) sont constitués respectivement par une boîte de jonction qui contient un nombre 1, correspondant au nombre 1 de voies de transmission numériques, de régénérateurs (PCM-R) auxquels est respectivement raccordé un dispositif de surveillance, caractérisé par le fait que le message d'état est un message de dérangement se présentant sous la forme de la transmission des coordonnées matricielles (k, l) de dispositif de surveillance déterminant le dérangement, que tous les messages d'états du dispositif de surveillance d'une boîte de jonction (M1 ... Mk) sont combinés entre eux par l'intermédiaire d'une fonction OU, et que les coordonnées matricielles (k, l) de la boîte de jonction concernée (M1 ...

Mk) sont transmises lors de l'identification d'un dérangement, et qu'en outre les voies de transmission de communications parallèles individuelles sont surveillées dans un poste terminal (ES), et les coordonnées matricielles des voies de transmission de communications où est apparu un dérangement sont transmises à un poste central (Mad), et que ce n'est que là qu'a lieu la combinaison des deux coordonnées matricielles (k, l) pour identifier l'emplacement du dérangement.

2. Procédé suivant la revendication 1, caractérisé par le fait que lors d'une transmission ultérieure des coordonnées matricielles (k, l), cellesci sont transmises indépendamment l'une de l'autre et non sous forme de combinaison.

3. Procédé suivant la revendication 1, caractérisé par le fait que le seuil de signalisation de dérangement est choisi différent dans les boîtes de jonction (M1 ... Mk) et dans les postes terminaux (ES).

# FIG 1

# FIG 2